# EUROPEAN PATENT SPECIFICATION

(11) **EP 3 987 210 B1**
(45) Date of publication and mention of the grant of the patent: **05.08.2026**
(21) Application number: 20734005.0
(22) Date of filing: 19.06.2020
(51) Int. Cl.: F16L 37/084, F16L 37/092

(54) **COUPLING ASSEMBLY**
KOPPLUNGSANORDNUNG
ENSEMBLE D'ACCOUPLEMENT

(30) Priority: 24.06.2019 NL 2023367
(43) Date of publication of application: 27.04.2022
(73) Proprietor: Pipelife Nederland B.V., 1601 MA Enkhuizen (NL)
(72) Inventor: VAN DEN ENDE, Rik, 2624 AJ Delft (NL)
(74) Representative: Nederlandsch Octrooibureau
(86) International application number: PCT/EP2020/067221
(87) International publication number: WO 2020/260166

(56) References cited:
- EP-A1- 3 258 155
- EP-A2- 2 090 815
- WO-A1-90/07671
- WO-A2-2009/145487
- DE-C- 280 991
- GB-A- 2 345 524
- JP-A- H02 253 079
- KR-B1- 101 272 272

## Description

### Technical field

The invention relates to a coupling assembly including an elongated body and a grip ring. The invention also relates to a grip ring for coupling pipes and to a method for coupling a pipe to a coupling assembly. The coupling assembly is particularly intended for coupling to high pressure plastic pipes, such as water pipes.

### Background art

Coupling assemblies for coupling to a pipe typically comprise an opening for receiving a pipe end of the pipe. A coupling assembly may be part of another pipe or coupling piece. Ideally, the pipe end remains attached to the coupling assembly after insertion into the coupling assembly, even under the influence of high pressure fluids or force applied onto the pipe or coupling assembly. This facilitates the installation of long pipelines while minimising leakage. In other words, the coupling assembly is preferably tension-resistant.

A tension-resistant coupling assembly grips a pipe end in such a way that the coupling remains intact under large tensile forces applied to the pipe end relative to the coupling assembly.

EP3258155 shows an example of a tension-resistant coupling assembly. The coupling assembly includes two grip rings in an annular chamber. Although this coupling assembly represents an improvement over the prior art, placement and/or removal of the grip rings remains complicated.

JP H02 253079 A shows another example of a tension-resistant coupling assembly. The coupling assembly has a grip ring installed in an annular chamber, the grip ring comprising a plurality of arc-shaped grip ring parts forming a circle, each grip ring part comprising connection portions at each end of the grip ring part adapted to engage with a connection portion of an adjacent grip ring part and wherein adjacent grip ring parts overlap in the circumferential direction.

### Summary

According to an aspect of the invention, there is provided a coupling assembly for coupling to a pipe end, comprising:
- a tubular body comprising an opening at a first end for receiving the pipe, a circumferential inner wall with a first diameter, and an annular recess in the inner wall forming an annular chamber with a second diameter which is larger than the first diameter, the second diameter gradually decreasing towards the opening;
- a grip ring in the chamber with an outer diameter larger than the first diameter but smaller than the second diameter, and an inner diameter smaller than the first diameter;
   the grip ring comprising three arc-shaped grip ring parts engaging with one another forming a circle, each grip ring part comprising connection portions at each end of the grip ring part adapted to engage with a connection portion of an adjacent grip ring part;
   wherein each grip ring part comprises a female connection portion at a first end and a male connection portion at a second end, wherein each male connection portion comprises a central protrusion extending into a circumferential direction, and wherein each female connection portion comprises a central recess between two sides in which the central protrusion is receivable; and
   wherein the two sides are spaced apart in axial direction and wherein the central recess is centred in axial direction; and
- a biasing member in the chamber biasing the grip ring in the axial direction.

This coupling assembly can be used to securely couple pipes while allowing for simple yet secure placement and/or removal of the grip ring. The grip ring parts are formed and sized such that they can be placed in the chamber one-by-one, and no bending or other deformation of the grip ring parts is required. The grip ring parts together extend over nearly the full circumference of the chamber, leaving a small circumferential clearance that allows for placement and/or removal of the grip ring parts. Since the connection portions engage with one another, a stable grip ring is formed in the chamber with limited movement of the grip ring parts relative to another. The connection portions are such that once all grip ring parts are placed in the chamber, the connection portions engage each other to an extent that they ensure the grip ring is retained in the chamber and does not fall out. However, the circumferential clearance when placed in the chamber allows the grip ring portions to expand slightly to easily and securely receive a pipe in the coupling assembly.

The grip ring comprises three grip ring parts, though this could be more in other embodiments. Three grip ring parts can allow for easy placement of the parts while maintaining a stable grip ring which does not fall out of the chamber.

The connection portions are portions which are especially shaped to receive another connection portion. Alternatively or in addition, there may be other ways of engagement between the connection portions, for instance magnetic, snap fit or other circumferential couplings.

Because the three grip ring parts do not need to be bent or deformed for insertion, little force is needed to insert a pipe into the coupling. Typically, the force needed to separate the grip ring parts is about 10 kg, while prior art coupling assemblies may require forces of around 80 kg. These numbers apply to pipes with a diameter of 110 mm. Different forces apply to pipes with other diameters but the relative improvement is similar.

The inner diameter of the grip ring in an expanded state (pushed radially outward within the chamber) may be slightly less than the outer diameter of the pipe. Ideally, the inner diameter of the grip ring is between 0.5 and 3 mm smaller than the outer diameter of the pipe, preferably between 1 and 2 mm or about 1.5 mm. For instance, for 110 mm pipes the inner diameter may be about 108.5 mm and for 160 mm pipes the inner diameter may be about 158.5 mm. All diameters are within 0.3 to 0.4 mm tolerance. The coupling assembly is particularly intended for pipes made of polyvinylchloride (PVC).

Each grip ring part may define an arc of more than 120 degrees, when measured from one end to another. They may only fit together in the chamber because they overlap.

The tubular body may be another pipe or a pipe coupling piece or a part thereof. The biasing member may be, for example, a spring which is a resilient strip in a wavy or sine shape, extending circumferentially in at least a part of the chamber. In an embodiment, the biasing member is a wave spring. A wave spring is compact and the wavy or sine shape allows for abutting both the grip ring and a first abutment wall limiting the chamber at a side away from the opening. Preferably, the wavy shape has at least three maxima and minima (or at least the same number as grip ring parts) to allow for abutting all grip ring parts at least once. The biasing member could also take other forms.

Although the annular chamber is explained to have a diameter which decreases towards the opening, a person skilled in the art will understand that the diameter of the annular chamber may alternatively be constant, as long as it is larger than the first diameter.

In an embodiment, adjacent grip ring parts overlap in the circumferential direction. In that way the mutual movement of adjacent grip ring parts is mechanically restricted. Grip ring parts overlapping in the circumferential direction means that there is an imaginary plane perpendicular to the circumferential direction that goes through adjacent grip ring parts.

In an embodiment, the overlapping grip adjacent ring parts are spaced apart in an axial direction, and/or the overlapping adjacent grip ring parts are spaced apart in a radial direction, perpendicular to the circumferential and axial directions. Adjacent grip ring parts spaced apart in a certain direction means that an imaginary line in that certain direction can be drawn which goes through both adjacent grip ring parts. In this way, mutual movement is restricted in particular directions.

Each pair of connection portions of adjacent grip ring parts include a female connection portion and a male connection portion. The male connection portion engages the female connection portion to secure together. Alternatively, in embodiments not covered by the current claims, all connection portions may be identical.

Each grip ring part includes a female connection portion at one end and a male connection portion at another end.
- eEach male connection portion comprises a central protrusion, extending into a circumferential direction; wherein each female connection portion comprises a central recess configured to receive the central protrusion, preferably wherein the central recess is located in between two sides which are spaced apart in the axial direction. When the recess is at a centred axial position, a relative axial tilt between the grip ring parts is limited. The central protrusions and recesses may have a length of between 3 and 30 mm, preferably between 5 and 15 mm, more preferably between 7 and 10 mm. The protrusions may extend over between 1 and 5%, preferably between 2 and 3%, of the length of the grip ring part.

In an embodiment, each central protrusion comprises a slot extending circumferentially from the end of the central protrusion; and each female connection portion comprises a tongue in the recess configured to be received in the slot. When the slot and tongue extend in axial direction, a relative radial tilt between the grip ring parts is limited. This will reduce the chance of the grip ring parts falling out of the chamber.

Although the described embodiment has central protrusion and recess extending in the radial direction and a slot and tongue extending in the axial direction, a person skilled in the art will understand that such a configuration could be reversed, with the couplings for the radial and axial directions being reversed.

In an embodiment, the chamber comprises radially extending first and second abutment walls defining the axial extent of the chamber. The second abutment wall limits the movement of the grip ring in the axial direction towards the opening, as it is pressed by the spring.

In an embodiment, the grip ring parts have substantially equal lengths, preferably the grip ring parts are identical. Forming the grip ring parts with equal lengths can result in easier to placement into the chamber. When grip ring parts are identical, they can be interchanged and it is not necessary to align particular parts with other particular parts, making installation easier and quicker.

In an embodiment, the grip ring comprises a toothing, preferably located at an inner surface of the grip ring. Toothings allow for secure holding of the pipe by the grip ring, thus improving the tension-resistance.

In an embodiment, the grip ring and/or the biasing member may be made of metal, preferably stainless steel. This allows for excellent durability. Stainless steel biasing members or springs are able to maintain their shape for at least 20 but up to 50 years, such that the probability of leaks is minimal over long time scales.

According to an aspect of the invention, and in accordance with the effects and advantages explained hereinabove, there is provided a grip ring for coupling to a pipe, comprising three arc-shaped grip ring parts, wherein each grip ring part comprises a female connection portion and a male connection portion, wherein each female connection portion is adapted to engage with a male connection portion, and wherein the grip ring parts are configured to together define a circular shape with an inner diameter when the grip ring parts are connected tightly to adjacent grip ring parts, and a second larger diameter when the grip ring parts are still secured together by the connection portions but are not engaged such that the connection portions connect tightly. The grip ring may be configured to be used in a coupling assembly as described herein.

According to an aspect of the invention, and in accordance with the effects and advantages explained hereinabove, there is provided a method of coupling a pipe to a coupling assembly, comprising the steps of: providing a coupling assembly as described herein; inserting an end of the pipe into the coupling assembly at least to an axial position such that the grip ring secures to an outer wall of the pipe, wherein the outer wall of the pipe end has a diameter larger than the first diameter.

In an embodiment, providing a coupling assembly comprises the steps of: providing a tubular body comprising an opening at a first end for receiving the pipe, a circumferential inner wall with a first diameter, and an annular recess in the inner wall forming an annular chamber with a second diameter which is larger than the first diameter, the second diameter gradually decreasing towards the opening; placing a grip ring in the chamber with an outer diameter larger than the first diameter but smaller than the second diameter, and an inner diameter smaller than the first diameter; the grip ring comprising three arc-shaped grip ring parts forming a circle, each grip ring part comprising connection portions at each end of the grip ring part adapted to engage with a connection portion of an adjacent grip ring part; placing a biasing member in the chamber biasing the grip ring in the axial direction.

The various aspects discussed in this patent can be combined in order to provide additional advantages.

### Brief description of drawings

Embodiments will now be described, by way of example only, with reference to the accompanying schematic drawings in which corresponding reference symbols indicate corresponding parts.
Figures 1A-1B show a cross-section of a coupling assembly, with a pipe being inserted into the coupling assembly;
Figure 1C shows a detail of a part of the tubular body of the coupling assembly;
Figures 2A-2B show perspective views of a grip ring part according to an embodiment;
Figure 3A shows a frontal view of a grip ring according to an embodiment;
Figure 3B shows a side view of the grip ring shown in Figure 3A;
Figures 4A-4B show cross-sections of the grip ring.

The figures are meant for illustrative purposes only, and do not serve as restriction of the scope or the protection as laid down by the claims.

### Detailed description

Further advantages, features and details of the present invention will be explained in the following description of some embodiments thereof. In the description, reference is made to the attached figures.

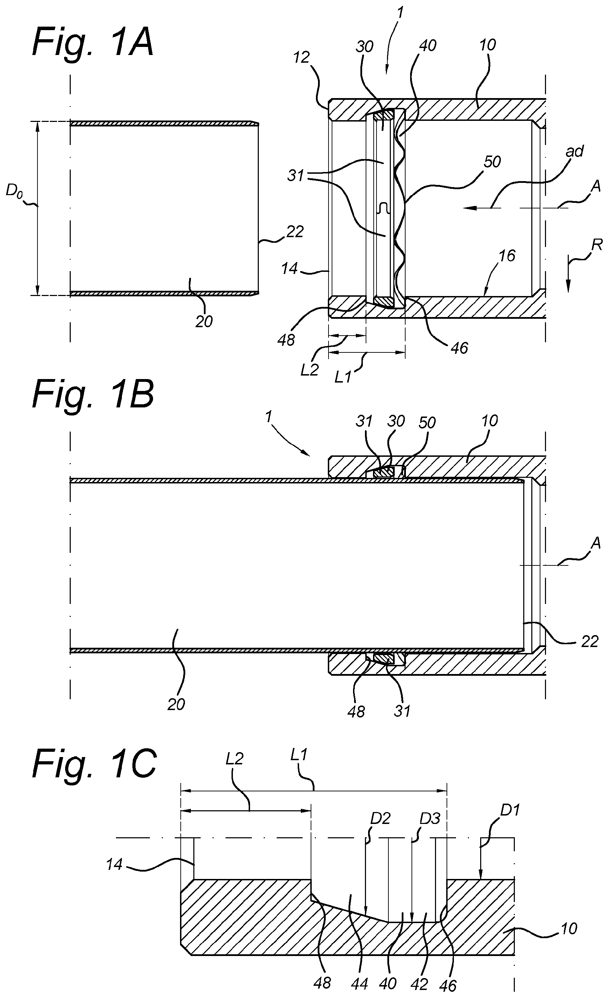

Figures 1A-1B show a cross-section of a coupling assembly 1 according to an embodiment and a pipe 20. The coupling assembly 1 comprises a tubular body 10 having an opening 14 at an end 12 for receiving the pipe end 22 of the pipe 20. The coupling body 10 defines an axial direction ad along its axial axis A, directed from the body 10 towards the opening 14. The pipe end 22 has an outer diameter D₀. In an embodiment, both the elongated body 10 and the pipe end 22 of the pipe 20 have a circular cross-section. From the outside, the elongated body 10 can be seen as a cylinder with an open end 12.

The elongated body 10 has an annular chamber 40 in an inner wall 16 of the coupling body 10. The chamber 40 is spaced from the end 12 of the body 10. The chamber 40 can also be seen as a circumferentially extending recess of the inner wall 16. The chamber 40 is bound by first and a second (annular) abutment walls 46, 48 at distances L1, L2, both larger than zero from the opening 14. The chamber 40 is shown in more detail in Figure 1C.

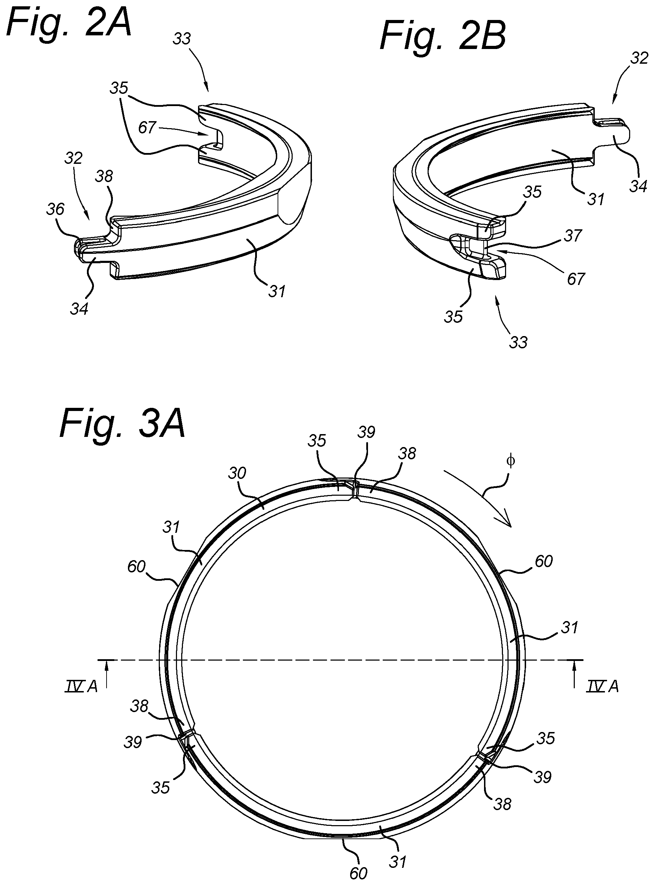

Inside the chamber 40, there is provided a grip ring 30 and a wave spring 50. The grip ring 30 and the wave spring 50 may be made of metal, preferably stainless steel. The grip ring 30 comprises three grip ring parts 31 which are segments that each extend circumferentially in the chamber and thus form part of the grip ring 30; the grip ring 30 is discussed in more detail in relation to Figs. 2A-3B.

In Fig. 1A and the further figures, cylindrical coordinates may be used to describe the spatial properties and ratios of the embodiments of a coupling assembly 1. The coupling assembly 1 has an axial axis A in the axial direction, a radial direction R, perpendicular to the axial axis A, and a circumferential direction Φ, the azimuth.

In this example, the elongated body 10 has rotational symmetry about the axial axis A. The axial direction ad is defined along the axial axis A from the body towards the opening 14. The radial direction R is meant herein as the directions which point radially from the axis A to the outside.

Figure 1A shows a pipe 20 prior to inserting the pipe end 22, which may be open (or closed in some embodiments), into the opening 14. The biasing member is in the form of a wave spring 50, which presses the grip ring 30 towards and against the second abutment wall 48. In this configuration, the grip ring 30 has a minimum diameter.

Figure 1B shows the coupling assembly 1 and pipe 20 of Figure 1A, after moving the pipe end 22 along the axial axis A into the coupling body 10. The pipe end 22 has pressed the grip ring 30 away from the second abutment wall 48. The grip ring parts 31 are also pushed apart in the radial direction such that the diameter of the grip ring 30 increases, allowing the pipe end 22 through. The wave spring 50 keeps pressing against the grip ring 30 along the direction ad. Consequently, the grip ring parts 31 are pressed against the tube 20 by the wave spring 50, which pressing provides some tensile resistance. The force of the wave spring 50 itself may not be sufficient for causing tensile-resistant coupling. However, because the grip ring 30 grips onto the pipe 20 and may even slightly cut into the outer wall of the pipe 20 if the pipe 20 is pulled away from the elongated body 10, a tension-resistant coupling is achieved.

Figure 1C shows a cross-section of a detail of the body 20 with annular chamber 40. The annular chamber 40 can be comparable to the chamber discussed in EP3258155. The chamber 40 has a rotational symmetry around the axial axis. The chamber 40 is provided with a first chamber portion 44 and a second chamber portion 42. The first chamber portion 44 extends from the second abutment wall 48 in the direction away from the opening 14. The second chamber portion 42 extends from the first chamber portion 44 away from the opening 14. The first chamber portion 44 is tapered towards the opening 14 of the elongated body 16. The first chamber portion 44 is connected to the second chamber portion 42 and is closer to the opening 14 than the second chamber portion 42. The chamber 40 is further provided with a first (annular) abutment wall 46 at a distance L1 other than zero from the opening 14 and opposite the second abutment wall 48. It holds that L1 is greater than L2. The second abutment wall 48 is located between the opening 14 and the first abutment wall 46.

The second chamber portion 42 of the chamber 40 extends between the first chamber portion 44 of the chamber 40 and the first abutment wall 46. The abutment walls 46, 48 define the chamber and form blockages for the grip ring 30 and the wave spring 50 so that they are secured inside the chamber 40 of the body 10.

The inner wall 16 has a diameter D1. The first chamber portion 44 has a second diameter D2. The second chamber portion 42 has a third diameter D3. The second diameter D2 is decreasing in the direction of the opening 14. The first diameter D1 is smaller than or equal to the second diameter D2, and the second diameter D2 is smaller than or equal to the third diameter D3. The second chamber portion 42 is tapered towards the opening of the elongated body. It holds that D1 ≤ D2 ≤ D3. In some embodiments, the chamber could have only one diameter, without a tapered section, or instead, only a tapered section without a section with a constant diameter.

Figure 2A-2B show two perspective views on a grip ring part 31. The grip ring part 31 is arc-shaped and comprises a male connection portion 32 and a female connection portion 33 for engaging with the male connection portion 32. These connection portions 32, 33 ensure that the grip ring parts 31 can connect to one another such that they do not fall out of the annular chamber when assembled together to form the grip ring. At the same time, the connection portions 32, 33 allow for some movability of the grip ring parts 31 relative to one another, to make placement and removal of the grip ring parts 31 in and out of the chamber possible, and to allow easier insertion of the pipe into the coupling. In particular, the connection portions 32, 33 allow for a limited tilt in an axial direction and a limited tilt in radial direction.

The male connection portion 32 comprises a central protrusion 34 extending from the main portion 38 and the female connection portion 33 comprises a recess 67 between two sides 35 in which the central protrusion 34 can be received. The sides 35 are spaced apart in an axial direction. For an improved connection, the central protrusion 34 comprises a slot 36 extending through distal end to a point into the protrusion. The slot 36 extends completely through the protrusion in the axial direction, though could extend through only a part in some embodiments. The female connection portion 33 comprises a tongue or web 37, which extends in the axial direction through a center portion of the recess 67 between the sides 35. In this way, the central protrusion 34 and recess 67 limit the relative tilt between the grip ring parts 31 in the axial direction, and the slot 36 and tongue 37 limit the relative tilt between the grip ring parts 31 in the radial direction.

Figure 3A shows a front view of a grip ring 30 according to an embodiment. The grip ring parts 31 overlap in a circumferential direction Φ. The connection portions 32, 33 are configured such that a narrow clearance 39 remains between the main portion 38 of the grip ring parts 31 and the sides 35. The clearance 39 allows for movement of the grip ring parts 31 relative to one another for placement in and removal from the annular chamber. This clearance 39 may result from the relative size of the tongue 37 and slot 36, which may be such that the central protrusion 24 cannot entirely be accommodated in between the sides 35 because the slot 36 abuts the tongue 37. Other variations may however be possible which allow for some limited movement but engages parts together when in the chamber.

In the shown embodiment, each grip ring part 31 comprises a flat portion 60 for stable placement of the grip ring parts 31 adjacent one another, for instance during shipping or storage in a box.

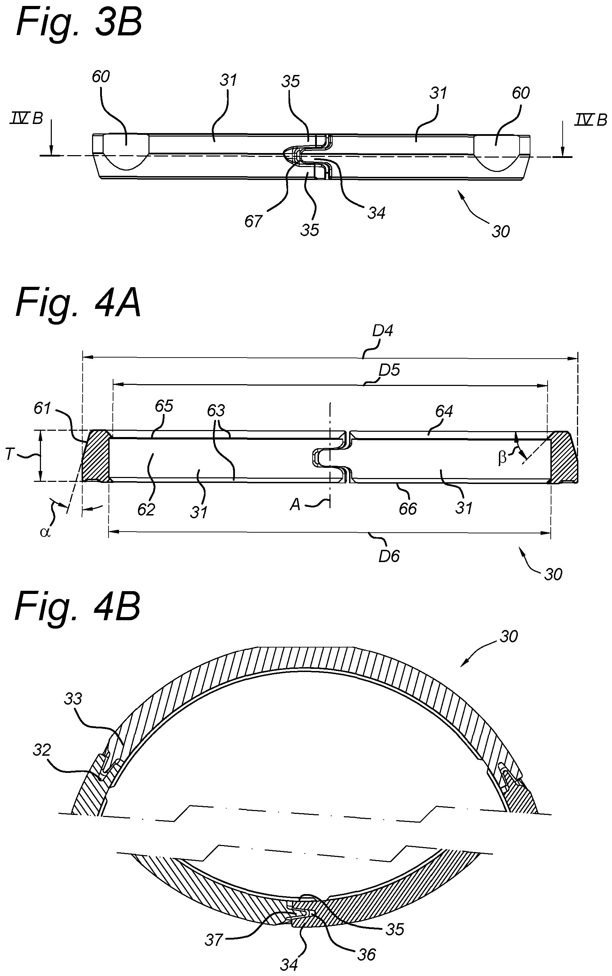

Figure 3B shows a side view of the grip ring 30 shown in Figure 3A. The grip ring 30 includes three grip ring parts 31 which each comprise a flat portion 60. The grip ring parts 31 each have a central protrusion 34 and two sides 35 with a recess 67 in between adapted to engage with the central protrusion 34.

Figure 4A shows a cross-section of the grip ring 30 along the line A-A in Figure 3A. In cross-section, the grip ring parts 31 comprise an angled surface 61 which defines a surface angle α with respect to the axial axis A, such that the diameter decreases towards the opening when the grip ring 30 is accommodated in a chamber of an elongated body (not shown). The surface angle α may be between 10 and 25 degrees, preferably about 16 degrees. The surface angle may correspond to the tapering of the first chamber portion.

The grip ring 30 comprises an entrance portion 64 which defines an entrance angle β with respect to the plane defined by the grip ring 30. The entrance portion 64 is configured to be located near the opening (as shown in Figures 1A-1B), such that when a pipe end is inserted, it will abut the entrance portion 64. Since the entrance portion 64 is tilted inwards, the grip ring parts 31 will be pushed outwards in a radial direction and simultaneously axially inwards into the coupling body 10 (both movements as far as allowed by the shape of the chamber). This will allow the pipe end to be further inserted into the coupling body 10 (not shown). Depending on the rigidity of the pipe end and the grip ring, and on the force to be applied on the pipe, the entrance angle β may be between 15 and 75 degrees, preferably between 35 and 55 degrees, more preferably about 45 degrees.

The interior surface 62 of the grip ring 30 includes a circumferential toothing 63 which comprises two ring-shaped protrusions 65, 66 extending in the radial direction towards the axis A, and are parallel to one another. The toothing 63 increases the grip on the pipe end after insertion into the opening (as shown in Figures 1A-1B). In the shown embodiment, the ring-shaped protrusion 65 which is configured to be closest to the opening, coincides with the entrance portion 64. The toothing 63 may be integrally formed with the grip ring 30, or may be made of a different material, such as a plastic, and attached to the grip ring 30 afterwards. Other embodiments could have more or fewer grip rings or other gripping features, such as gripping teeth, flanges, arcs, etc.

The grip ring 30 has an outer diameter D4 and an inner diameter D5. Excluding toothing 63, the grip ring 30 has a nominal inner diameter D6. The grip ring 30 has a thickness T in the axial direction. The thickness T may be between 5 and 20 mm, preferably between 10 and 15 mm, more preferably about 13 mm. In the radial direction the grip ring 30 may have a thickness of between 3 and 10 mm, preferably between 5 and 8 mm.

Figure 4B shows a cross-section of the grip ring 30 along the line B-B in Figure 3B, cut through the central protrusion 34 and the recess 67. The three circles each show a connection between a male connection portion 32, comprising a central protrusion 34, and a female connection portion 33. A side 35 is visible behind the central protrusion 34. The central protrusion 34 comprises a slot 36 while the female connection portion 33 comprises a tongue 37 for accommodation in the slot 36.

The coupling assembly 1 as described herein can be used to securely couple pipes 20 while allowing for simple yet secure placement and/or removal of the grip ring 30. The grip ring parts 31 are formed and sized such that they can be placed in the chamber one-by-one, and no bending or other deformation of the grip ring parts 31 is required. The grip ring parts 31 together extend over nearly the full circumference of the chamber 40, leaving a small circumferential clearance 39 that allows for placement and/or removal of the grip ring parts 31. Since the connection portions 33, 34 engage with one another, a stable grip ring 30 is formed in the chamber 40 with limited movement of the grip ring parts 31 relative to another. The connection portions 33, 34 are such that once all grip ring parts 31 are placed in the chamber, the connection portions 33, 34 engage each other to an extent that they ensure the grip ring 31 is retained in the chamber and does not fall out. However, the circumferential clearance 39 when placed in the chamber 40 allows the grip ring portions 31 to expand slightly to easily and securely receive a pipe 20 in the coupling assembly 1. The biasing member 50 biases the grip ring 30 towards the opening, to ensure the grip ring parts 31 grip the pipe 20. This causes the grip ring parts 31 to bear against and even slightly cut into the outer wall of the pipe 20 when pipe 20 is pulled, such that tensile-resistant coupling is achieved.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

## Claims

1. Coupling assembly (1) for coupling to a pipe end (22), comprising:
- a tubular body (10) comprising an opening (14) at a first end (12) for receiving the pipe (20), a circumferential inner wall (16) with a first diameter (D1), and an annular recess in the inner wall (16) forming an annular chamber (40) with a second diameter (D2) which is larger than the first diameter (D1), the second diameter (D2) gradually decreasing towards the opening (14);
- a grip ring (30) in the chamber (40) with an outer diameter (D4) larger than the first diameter (D1) but smaller than the second diameter (D2), and an inner diameter (D5) smaller than the first diameter (D1);
the grip ring (30) comprising three arc-shaped grip ring parts (31) engaging with one another forming a circle, wherein each grip ring part (31) comprises connection portions (32,33) at each end of the grip ring part (31) adapted to engage with a connection portion (32,33) of an adjacent grip ring part (31) and wherein adjacent grip ring parts (31) overlap in the circumferential direction,
wherein each grip ring part (31) comprises a female connection portion (33) at a first end and a male connection portion (32) at a second end, wherein each male connection portion (32) comprises a central protrusion (34) extending into a circumferential direction, and wherein each female connection portion (33) comprises a central recess (67) between two sides (35) in which the central protrusion (34) is receivable; and
wherein the two sides (35) are spaced apart in axial direction and wherein the central recess (67) is centred in axial direction; and
- the assembly further comprises a biasing member (50) in the chamber (40) biasing the grip ring (30) in the axial direction.

2. Coupling assembly (1) according to claim 1, wherein each central protrusion (34) comprises a slot (36) extending circumferentially from the end of the central protrusion (34); and each female connection portion (33) comprises a tongue (37) in the recess (67) configured to be received in the slot (36).

3. Coupling assembly (1) according to claim 2, wherein the slot (36) extends axially from a first side of the central protrusion (34) to a second side, and the tongue (37) extends axially from a first side of the recess (67) to a second side.

4. Coupling assembly (1) according to any one of the preceding claims, wherein the chamber (40) comprises radially extending first and second abutment walls (46,48) defining the axial extent of the chamber (40).

5. Coupling assembly (1) according to any of the preceding claims, wherein a portion of chamber (42) in between the first annular wall (46) and the portion with the second diameter (D2) has a constant third diameter (D3).

6. Coupling assembly (1) according to claim 5, wherein the grip ring (30) is located in the portion of the chamber (40) with the second diameter (D2), and the biasing member (50) is located in the portion (44) of the chamber with the second diameter (D2).

7. Coupling assembly (1) according to any one of the preceding claims, wherein the grip ring parts (31) have substantially equal lengths, preferably wherein the grip ring parts (31) are identical.

8. Coupling assembly (1) according to any one of the preceding claims, wherein the grip ring (30) comprises a toothing (63) on an interior surface, and/or the biasing member (50) is a wave spring.

9. Method of coupling a pipe (20) to a coupling assembly (1), comprising the steps of:
- providing a coupling assembly (1) according to any one of claims 1-10;
- inserting an end (22) of the pipe (20) into the coupling assembly (1) at least to an axial position such that the grip ring (30) secures to an outer wall of the pipe (20), wherein the outer wall of the pipe end (22) has a diameter larger than the first diameter, wherein providing a coupling assembly (1) comprises the steps of:
- providing a tubular body (10) comprising an opening (14) at a first end (12) for receiving the pipe (20), a circumferential inner wall (16) with a first diameter (D1), and an annular recess in the inner wall (16) forming an annular chamber (40) with a second diameter (D2) which is larger than the first diameter (D1), the second diameter (D2) gradually decreasing towards the opening (14);
- placing a grip ring (30) in the chamber (40) with an outer diameter (D4) larger than the first diameter but smaller than the second diameter (D2), and an inner diameter (D5) smaller than the first diameter (D1); the grip ring (30) comprising three arc-shaped grip ring parts (31) forming a circle, each grip ring part (31) comprising connection portions (32,33) at each end of the grip ring part (31) adapted to engage with a connection portion (32,33) of an adjacent grip ring part (31), wherein
placing the grip ring (30) in the chamber (40) comprises placing each of the grip ring parts (31) in the chamber (40) one-by-one;
- wherein the method further comprises placing a biasing member (50) in the chamber biasing the grip ring (30) in the axial direction.

## Patentansprüche

1. Kupplungsanordnung (1) zur Kupplung an ein Rohrende (22), die Folgendes umfasst:
- einen röhrenförmigen Körper (10), der eine Öffnung (14) an einem ersten Ende (12) zur Aufnahme des Rohrs (20), eine umlaufende Innenwand (16) mit einem ersten Durchmesser (D1) und eine ringförmige Aussparung in der Innenwand (16) umfasst, die eine ringförmige Kammer (40) mit einem zweiten Durchmesser (D2) bildet, der größer als der erste Durchmesser (D1) ist, wobei der zweite Durchmesser (D2) zur Öffnung (14) hin allmählich abnimmt;
- einen Griffring (30) in der Kammer (40) mit einem Außendurchmesser (D4), der größer als der erste Durchmesser (D1), aber kleiner als der zweite Durchmesser (D2) ist, und einem Innendurchmesser (D5), der kleiner als der erste Durchmesser (D1) ist;
wobei der Griffring (30) drei bogenförmige Griffringteile (31) umfasst, die ineinandergreifen und einen Kreis bilden, wobei jeder Griffringteil (31) Verbindungsteile (32,33) an jedem Ende des Griffringteils (31) umfasst, die zum Eingriff mit einem Verbindungsteil (32,33) eines benachbarten Griffringteils (31) geeignet sind, und wobei sich die benachbarten Griffringteile (31) in Umfangsrichtung überlappen,
wobei jeder Griffringteil (31) einen weiblichen Verbindungsteil (33) an einem ersten Ende und einen männlichen Verbindungsteil (32) an einem zweiten Ende umfasst, wobei jeder männliche Verbindungsteil (32) einen zentralen Vorsprung (34) umfasst, der sich in Umfangsrichtung erstreckt, und wobei jeder weibliche Verbindungsteil (33) eine zentrale Aussparung (67) zwischen zwei Seiten (35) umfasst, in die der zentrale Vorsprung (34) aufgenommen werden kann; und
wobei die beiden Seiten (35) in axialer Richtung beabstandet sind und wobei die zentrale Aussparung (67) in axialer Richtung zentriert ist; und
- die Anordnung ferner ein Vorspannelement (50) in der Kammer (40) umfasst, das den Griffring (30) in axialer Richtung vorspannt.

2. Kupplungsanordnung (1) nach Anspruch 1, wobei jeder zentrale Vorsprung (34) einen Schlitz (36) umfasst, der sich von dem Ende des zentralen Vorsprungs (34) umlaufend erstreckt; und jeder weibliche Verbindungsteil (33) eine Zunge (37) in der Aussparung (67) umfasst, die so konfiguriert ist, dass sie in den Schlitz (36) aufgenommen werden kann.

3. Kupplungsanordnung (1) nach Anspruch 2, wobei sich der Schlitz (36) axial von einer ersten Seite des zentralen Vorsprungs (34) zu einer zweiten Seite erstreckt und sich die Zunge (37) axial von einer ersten Seite der Aussparung (67) zu einer zweiten Seite erstreckt.

4. Kupplungsanordnung (1) nach einem der vorhergehenden Ansprüche, wobei die Kammer (40) sich radial ersteckende erste und zweite Anschlagwände (46,48) umfasst, die die axiale Ausdehnung der Kammer (40) definieren.

5. Kupplungsanordnung (1) nach einem der vorhergehenden Ansprüche, wobei ein Teil der Kammer (42) zwischen der ersten ringförmigen Wand (46) und dem Teil mit dem zweiten Durchmesser (D2) einen konstanten dritten Durchmesser (D3) aufweist.

6. Kupplungsanordnung (1) nach Anspruch 5,
wobei sich der Griffring (30) in dem Teil der Kammer (40) mit dem zweiten Durchmesser (D2) befindet und sich das Vorspannelement (50) in dem Teil (44) der Kammer mit dem zweiten Durchmesser (D2) befindet.

7. Kupplungsanordnung (1) nach einem der vorhergehenden Ansprüche, wobei die Griffringteile (31) im Wesentlichen die gleiche Länge aufweisen, wobei die Griffringteile (31) vorzugsweise identisch sind.

8. Kupplungsanordnung (1) nach einem der vorhergehenden Ansprüche, wobei der Griffring (30) eine Verzahnung (63) an einer Innenfläche umfasst und/oder das Vorspannelement (50) eine Wellenfeder ist.

9. Verfahren zur Kupplung eines Rohrs (20) mit einer Kupplungsanordnung (1), das die folgenden Schritte umfasst:
- Bereitstellen einer Kupplungsanordnung (1) nach einem der Ansprüche 1-10;
- Einführen eines Endes (22) des Rohrs (20) in die Kupplungsanordnung (1) mindestens bis zu einer axialen Position, sodass der Griffring (30) an einer Außenwand des Rohrs (20) befestigt wird, wobei die Außenwand des Rohrendes (22) einen größeren Durchmesser als den ersten Durchmesser aufweist, wobei das Bereitstellen einer Kupplungsanordnung (1) die folgenden Schritte umfasst:
- Bereitstellen eines röhrenförmigen Körpers (10), der eine Öffnung (14) an einem ersten Ende (12) zur Aufnahme des Rohrs (20), eine umlaufende Innenwand (16) mit einem ersten Durchmesser (D1) und eine ringförmige Aussparung in der Innenwand (16) umfasst, die eine ringförmige Kammer (40) mit einem zweiten Durchmesser (D2) bildet, der größer als der erste Durchmesser (D1) ist, wobei der zweite Durchmesser (D2) zur Öffnung (14) hin allmählich abnimmt;
- Anordnen eines Griffrings (30) in der Kammer (40) mit einem Außendurchmesser (D4), der größer als der erste Durchmesser, aber kleiner als der zweite Durchmesser (D2) ist, und einem Innendurchmesser (D5), der kleiner als der erste Durchmesser (D1) ist; wobei der Griffring (30) drei bogenförmige Griffringteile (31) umfasst, die einen Kreis bilden, wobei jeder Griffringteil (31) Verbindungsteile (32,33) an jedem Ende des Griffringteils (31) umfasst, die zum Eingriff mit einem Verbindungsteil (32,33) eines benachbarten Griffringteils (31) geeignet sind, wobei das Anordnen des Griffrings (30) in der Kammer (40) das Anordnen jedes der Griffringteile (31) nacheinander in der Kammer (40) umfasst;
- wobei das Verfahren ferner das Anordnen eines Vorspannelements (50) in der Kammer umfasst, das den Griffring (30) in axialer Richtung vorspannt.

## Revendications

1. Ensemble de couplage (1) pour le couplage à une extrémité de tuyau (22), comprenant :
- un corps tubulaire (10) comprenant une ouverture (14) à une première extrémité (12) pour recevoir le tuyau (20), une paroi intérieure (16) circonférentielle avec un premier diamètre (D1), et un évidement annulaire dans la paroi intérieure (16) formant une chambre annulaire (40) avec un deuxième diamètre (D2) qui est plus grand que le premier diamètre (D1), le deuxième diamètre (D2) diminuant progressivement vers l'ouverture (14) ;
- un anneau de préhension (30) dans la chambre (40) avec un diamètre extérieur (D4) plus grand que le premier diamètre (D1) mais plus petit que le deuxième diamètre (D2), et un diamètre intérieur (D5) plus petit que le premier diamètre (D1) ;
l'anneau de préhension (30) comprenant trois parties d'anneau de préhension en forme d'arc (31) s'engageant les unes dans les autres pour former un cercle, où chaque partie d'anneau de préhension (31) comprend des portions de connexion (32, 33) à chaque extrémité de la partie d'anneau de préhension (31) adaptées pour s'engager avec une portion de connexion (32, 33) d'une partie d'anneau de préhension adjacente (31) et où les parties d'anneau de préhension adjacentes (31) se chevauchent dans la direction circonférentielle,
où chaque partie d'anneau de préhension (31) comprend une portion de connexion femelle (33) à une première extrémité et une portion de connexion mâle (32) à une deuxième extrémité, où chaque portion de connexion mâle (32) comprend une saillie centrale (34) s'étendant dans une direction circonférentielle, et où chaque portion de connexion femelle (33) comprend un évidement central (67) entre deux côtés (35) dans lequel la saillie centrale (34) peut être reçue ; et
où les deux côtés (35) sont espacés dans une direction axiale et où l'évidement central (67) est centré dans une direction axiale ; et
- l'ensemble comprend en outre un élément de sollicitation (50) dans la chambre (40) sollicitant l'anneau de préhension (30) dans la direction axiale.

2. Ensemble de couplage (1) selon la revendication 1, où chaque saillie centrale (34) comprend une fente (36) s'étendant de manière circonférentielle à partir de l'extrémité de la saillie centrale (34) ; et chaque portion de connexion femelle (33) comprend une languette (37) dans l'évidement (67) configurée pour être reçue dans la fente (36).

3. Ensemble de couplage (1) selon la revendication 2, où la fente (36) s'étend axialement d'un premier côté de la saillie centrale (34) à un deuxième côté, et la languette (37) s'étend axialement d'un premier côté de l'évidement (67) à un deuxième côté.

4. Ensemble de couplage (1) selon l'une quelconque des revendications précédentes, où la chambre (40) comprend des première et deuxième parois de butée s'étendant radialement (46,48) et définissant l'étendue axiale de la chambre (40).

5. Ensemble de couplage (1) selon l'une quelconque des revendications précédentes, où une portion de chambre (42) située entre la première paroi annulaire (46) et la portion avec le deuxième diamètre (D2) a un troisième diamètre constant (D3).

6. Ensemble de couplage (1) selon la revendication 5, où l'anneau de préhension (30) est situé dans la portion de la chambre (40) avec le deuxième diamètre (D2), et l'élément de sollicitation (50) est situé dans la portion (44) de la chambre avec le deuxième diamètre (D2).

7. Ensemble de couplage (1) selon l'une quelconque des revendications précédentes, où les parties d'anneau de préhension (31) ont des longueurs sensiblement égales, de préférence où les parties d'anneau de préhension (31) sont identiques.

8. Ensemble de couplage (1) selon l'une quelconque des revendications précédentes, où l'anneau de préhension (30) comprend une dentelure (63) sur une surface intérieure, et/ou l'élément de sollicitation (50) est un ressort ondulé.

9. Procédé de couplage d'un tuyau (20) à un ensemble de couplage (1), comprenant les étapes suivantes :
- fournir un ensemble de couplage (1) selon l'une quelconque des revendications 1 à 10 ;
- insérer une extrémité (22) du tuyau (20) dans l'ensemble de couplage (1) au moins jusqu'à une position axiale telle que l'anneau de préhension (30) se fixe à une paroi extérieure du tuyau (20), où la paroi extérieure de l'extrémité de tuyau (22) a un diamètre plus grand que le premier diamètre, où fournir un ensemble de couplage (1) comprend les étapes suivantes :
- fournir un corps tubulaire (10) comprenant une ouverture (14) à une première extrémité (12) pour recevoir le tuyau (20), une paroi intérieure circonférentielle (16) avec un premier diamètre (D1), et un évidement annulaire dans la paroi intérieure (16) formant une chambre annulaire (40) avec un deuxième diamètre (D2) qui est plus grand que le premier diamètre (D1), le deuxième diamètre (D2) diminuant progressivement vers l'ouverture (14) ;
- placer un anneau de préhension (30) dans la chambre (40) avec un diamètre extérieur (D4) plus grand que le premier diamètre mais plus petit que le deuxième diamètre (D2), et un diamètre intérieur (D5) plus petit que le premier diamètre (D1) ; l'anneau de préhension (30) comprenant trois parties d'anneau de préhension en forme d'arc (31) formant un cercle, chaque partie d'anneau de préhension (31) comprenant des portions de connexion (32, 33) à chaque extrémité de la partie d'anneau de préhension (31) adaptées pour s'engager avec une portion de connexion (32, 33) d'une partie d'anneau de préhension adjacente (31), où
placer l'anneau de préhension (30) dans la chambre (40) comprend le placement de chacune des parties d'anneau de préhension (31) dans la chambre (40) une par une ;
- où le procédé comprend en outre placer un élément de sollicitation (50) dans la chambre sollicitant l'anneau de préhension (30) dans la direction axiale.
